# EUROPÄISCHE PATENTSCHRIFT

(11) **EP 0 476 256 B1**
(45) Veröffentlichungstag und Bekanntmachung des Hinweises auf die Patenterteilung: **14.06.1995**
(21) Anmeldenummer: 91111717.4
(22) Anmeldetag: 13.07.1991
(51) Int. Cl.: C08F 12/08, C08J 9/16

(54) **Verfahren zur Körnungssteuerung bei der Herstellung von expandierbaren Styrolpolymerisaten durch Suspensionspolymerisation**
Process for controlling granulation in the preparation of expandable styrene polymers by suspension polymerization
Procédé pour régler la granulation lors de la préparation de polymères expansibles de styrène par polymérisation en suspension

(30) Priorität: 15.09.1990 DE 4029298
(43) Veröffentlichungstag der Anmeldung: 25.03.1992
(73) Patentinhaber: HÜLS AKTIENGESELLSCHAFT, 45764 Marl (DE)
(72) Erfinder: Speikamp, Hans-Dieter, Dr., W-4358 Haltern 6 (DE); Kühnle, Adolf, Dr., W-4370 Marl (DE); Bretschneider, Jürgen, W-4370 Marl (DE)

(56) Entgegenhaltungen:
- US-A- 4 363 881
- US-A- 4 582 859
- US-A- 4 731 388

## Beschreibung

Bei der Herstellung von expandierbarem Polystyrol durch eine wäßrige Suspensionspolymerisation fällt ein relativ breites Kornspektrum an. Etwa 90 % der Teilchen liegen im Bereich zwischen 0,5 und 2,0 mm mit einem Maximum zwischen 0,7 und 1,0 mm.

Unterschiedliche Kornfraktionen gehen in verschiedene Anwendungsgebiete. So wird feines Material im Verpackungssektor verarbeitet, während grobes Material in erster Linie im Bausektor (Isolierung, Trittschalldämmung) Verwendung findet.

Die Marktanforderungen wechseln dabei ständig. Daher ist es wünschenswert, die Körnungsverteilung während der Polymerisation gezielt zu steuern, ohne die Suspensionsstabilität zu gefährden. Die bisher einzige Möglichkeit der Steuerung besteht in einer qualitativen und quantitativen Variation der Suspensionsmittelzusammensetzung (DE-OS 33 15 69, DE-OS 33 15 70, JA 945 248, DE-OS 37 28 044).

Eine gezielte Beeinflussung der Körnungsverteilung ist bei diesen Verfahren während der Suspensionspolymerisation nicht mehr möglich, lediglich für den nächstfolgenden Ansatz kann die Suspensionsmittelmenge neu festgelegt werden.

Die gezielte Einstellung grober Körnungen führt dabei im kritischen Polymerisationsbereich (120 bis 180 min) immer wieder zu Instabilitäten, denen durch eine vorzeitige Nachstabilisierung begegnet wird. Das hat jedoch in der Regel erhöhte Innenwassergehalte und ein sehr breites Kornspektrum (viel Feingut) zur Folge.

Die Ursache für das Auftreten von Instabilitäten und die schlechte Reproduzierbarkeit dürfte unter anderem in der Charakteristik der Teilchengrößenentwicklung während der Suspensionspolymerisation zu suchen sein. Die zunächst sehr feinen Teilchen wachsen in den ersten 120 min Polymerisationszeit nur unwesentlich. Danach kommt es innerhalb kurzer Zeit (120 bis 180 min) zu einem drastischen Teilchenwachstum bis zum Erreichen der gewünschten Endkörnung am Absetzpunkt. Am Absetzpunkt beträgt der Styrolumsatz ca. 70%. Die Viskosität der Teilchen ist zu diesem Zeitpunkt so hoch, daß Koaleszenzvorgänge und Teilchenneubildung durch Zerteilung praktisch nicht mehr stattfinden. Das heißt, die Teilchen behalten ihre Identität.

Unmittelbar vor dem Absetzpunkt ist die Suspension relativ instabil und die Tendenz zum Aufrahmen wird mit abnehmender Suspensionsmittelmenge immer größer. Außerdem bedingt dieser Verlauf der Teilchengrößenentwicklung eine schlechte Reproduzierbarkeit der Ansätze.

Als Alternative bietet sich die Saatpolymerisation an. Dabei wird ein vollständig auspolymerisiertes Korn definierter Größe vorgelegt und eine bestimmte Menge organischer Phase nachdosiert (EP-PS 102 655; US-PS 154 184; FR-OS 2 238 717; FR-OS 2 238 718; DE-OS 2 338 133). Dieses Verfahren ermöglicht über die Dosiermenge eine Beeinflussung der Körnung der Polymerisation.

Die Saatpolymerisation bedingt jedoch das Vorhandensein eines beschichtungsmittelfreien Saatkorns. Dessen Herstellung erfordert einen eigenen Polymerisationsprozeß und verringert damit die Raum/Zeit-Ausbeute. Die homogene Verteilung der nachdosierten organischen Phase bedingt eine sehr langsame Dosiergeschwindigkeit. Andernfalls kommt es zu einer unerwünschten Teilchenneubildung (Feingut).

Aufgabe dieser Erfindung war es nun, ein Verfahren zur Körnungssteuerung der Suspensionspolymerisation zu finden, welches im kritischen Bereich stabil zu fahren ist und mit dem eine grobe Endkörnung erzielt werden kann.

Überraschend gelöst wurde diese Aufgabe durch das erfindungsgemäße Verfahren, bei dem die Körnungsverteilung nicht mehr durch die Suspensionsmittelmenge gesteuert wird.
Vielmehr wird bis zum Absetzpunkt der Teilchen (70 % Styrolumsatz; ca. 180 min Reaktionszeit) eine feine und damit stabile Körnung eingestellt (hohes Suspensionsmittelniveau). Die Suspensionsrezeptur ist identisch mit der Standard-Rezeptur. Die Teilchenentwicklung verläuft bis zum Absetzpunkt relativ flach, das drastische Teilchenwachstum findet nicht statt. Ließe man diesen Ansatz nach Standard-Rezeptur weiter polymerisieren, würde man eine unerwünschte sehr feine Körnung erhalten. Die gewünschte Endkörnung wird dann durch Nachdosieren weiterer organischer Phase eingestellt. Die zufließende organische Phase diffundiert dabei in die bereits vorhandenen und stabilen Polymerteilchen. Dies führt zu einer kontinuierlichen Kornvergröberung. Eine Teilchenneubildung ist dabei unerwünscht, denn sie führt zu einer Erhöhung des Feinanteils. Die Dosiergeschwindigkeit sollte daher so gewählt werden, daß möglichst keine freien Styroltröpfchen in der Suspension vorhanden sind. Ein weiteres die Dosiergeschwindigkeit bestimmendes Kriterium ist der Absetzpunkt der Teilchen. Der Reststyrolgehalt sollte immer ≦ 30 Gew.-% sein. Auf diese Weise behalten die Teilchen ihre Identität und die Suspension kann nicht instabil werden.

Nach Beendigung der Dosierung wird die Suspensionspolymerisation in herkömmlicher Weise fortgesetzt. Der normale Polymerisationszyklus wird praktisch nur für den Zeitraum der Dosierung unterbrochen. Die damit verbundene Zykluszeitverlängerung wird jedoch größtenteils durch die Erhöhung des Phasenverhältnisses org/wäßr. Phase und damit der Ausbeute kompensiert.

In den Druckschriften US-PS 4 137 388, JP 62 053 306 und JP 5393/6 wurden zwar Nachdosierungen organischer Phasen vorgenommen. Diese Maßnahme diente jedoch nur der Verbesserung der Verarbeitungseigenschaften (Einfluß auf die Molmassenverteilung) oder der Verbesserung der optischen Eigenschaften.

Im Unterschied zu dem hier beschriebenen Verfahren erfolgt die Dosierung in den oben zitierten Schriften nicht mit einer bestimmten den Reststyrolgehalt konstant haltenden Dosiergeschwindigkeit und macht daher eine kontrollierte Körnungssteuerung unmöglich.

Nach dem erfindungsgemäßen Verfahren werden 70 bis 90 %, vorzugsweise 80 bis 90 %, der zu polymerisierenden Menge an Styrol und ggf. übliche Comonomere, in denen einer oder mehrere in Wasser unlösliche radikalbildende Initiatoren gelöst sind, unter Rühren in etwa derselben Menge Wasser dispergiert. Menge und Art der Polymerisationsinitiatoren werden mit der Polymerisationstemperatur so abgestimmt, daß der Endumsatz möglichst vollständig ist und die Molmasse des Polymeren die gewünschten Werte hat. Zur Stabilisierung der dispergierten Teilchen werden dem Reaktionsgemisch organische oder anorganische Dispergiermittel zugesetzt. Diese Mischung wird auf Polymerisationstemperatur (90 °C) aufgeheizt und anschließend bis zu einem 70%igen Styrolumsatz (ca. 180 min Reaktionszeit meist im Bereich von 120 bis 210 Minuten) polymerisiert. Danach wird das restliche Styrol (10 bis 30 % der Gesamtmenge), welches Initiator und Dispergiermittel enthält, dem Reaktionsgemisch innerhalb von 1 bis 3 Stunden, vorzugsweise 1 bis 2 Stunden, zudosiert. Anschließend erfolgt die Treibmittelzugabe.

Die Dosiergeschwindigkeit sollte dabei derart gewählt werden, daß der Restmonomergehalt immer kleiner/gleich 30 Gew. % beträgt.

Im Anschluß an die Nachdosierung der organischen Phase wird der Ansatz auspolymerisiert.

Als optimal im Hinblick auf die Zielgröße Kornvergröberung erwies sich eine 2stündige Dosierung von 20 Gew.-% organischer Phase nach 180 min Reaktionszeit.

Für die Herstellung der expandierbaren Styrolpolymerisate werden als Monomer Styrol oder Monomergemische mit mindestens 50 Gewichtsprozent Styrol eingesetzt. Geeignete Comonomere sind z. B. α-Methylstyrol, kernhalogenierte Styrole, Acrylnitril, Ester der Acryl- und Methacrylsäure von Alkoholen mit 1 bis 8 Kohlenstoffatomen, N-Vinylverbindungen, wie N-Vinylcarbazol.

Die Suspensionspolymerisation wird bei Temperaturen von 80 bis 130 °C durchgeführt. Sie wird in üblicher Weise mit einer oder mehreren radikalbildenden Substanzen initiiert, wobei t-Butylbenzoat, t-Butylperoctoat, Di-t-butylperoxid, Dibenzoylperoxid oder deren Mischungen als Beispiele genannt seien.

Als Suspensionsstabilisatoren können in bekannter Weise organische Schutzkolloide, wie Polyvinylalkohol, Polyvinylpyrrolidon, Polyvinylpyrrolidoncopolymerisate und Hydroxyalkylcellulosen oder mineralische Suspendierhilfsmittel, wie fein verteiltes Tricaliumphosphat und Bariumphosphat oder auch Gemische aus organischen Schutzkolloiden und mineralischen Suspendiermittel verwendet werden.

Das Treibmittel für die Polymerperlen kann je nach Verfahren entweder während oder nach der Polymerisation zugegeben werden. Vor Beendigung der Nachdosierung ist eine Treibmittelzugabe jedoch nicht möglich.

Als Treibmittel werden die bekannten niedrigsiedenden, nur quellenden, flüssigen Kohlenwasserstoffe, wie Pentan, Hexan, cycloaliphatische Kohlenwasserstoffe, wie Cyclohexan oder Halogenkohlenwasserstoffe, wie Dichlordifluormethan, 1,2,2-Trifluor-1,1,2-trichlorethan oder auch Mischungen dieser Verbindungen verwendet. Die Menge an Treib mittel liegt bei 3 bis 15 Gew.-%, vorzugsweise zwischen 5 und 8 Gew.-% bezogen auf das Styrolpolymerisat.

Die expandierbaren Styrolpolymerisate können die üblichen Flammschutzmittel wie organische Halogenverbindungen, insbesondere Bromverbindungen, enthalten; insbesondere seien genannt die vollständig oder partiell bromierten Oligomeren des Butadiens oder des Isoprens mit einem mittleren Polymerisationsgrad von 2 bis 20, z. B. 1,2,5,6-Tetrabromcyclooctan, 1,2,5,6,9,10-Hexabromcyclodecan, bromiertes Polybutadien mit einem Polymerisationsgrad von z. B. 3 bis 15.

Die organischen Halogenverbindungen sind in Mengen von 0,4 bis 3 Gew.-% im expandierbaren Styrolpolymerisat enthalten. Zusätzlich zu den flammhemmenden Halogenverbindungen können die bekannten Synergisten in üblichen Mengen eingesetzt werden, vorzugsweise organische Peroxide, insbesondere solche mit einer Halbwertszeit von mindestens zwei Stunden bei 373 K.

Falls gewünscht, können die Halogenverbindungen auch in bekannter Weise in Mengen von 0,05 bis 1 Gew.-% zur Verbesserung der Mindestverweilzeit eingesetzt werden.

Die expandierbaren Styrolpolymerisate können außerdem Zuschlagstoffe wie Farbstoffe, Füllstoffe und Stabilisierungsmittel enthalten. Sie liegen nach der Herstellung in Perlform vor und haben einen Teilchendurchmesser zwischen 0,5 und 2,0 mm.

Die Styrolpolymerisate werden nach den üblichen Verfahren in vorgeschäumtem Zustand durch Erhitzen in Formen, welche nicht gasdicht schließen, weiter aufgeschäumt und zu Schaumstoffkörpern versintert, die in ihren Ausmaßen dem Innenhohlraum der verwendeten Formen entsprechen.

### Beispiel 1

In einem 150-1-Reaktor werden 50 kg Wasser mit 76,4 g Hydroxyethlcellulose, 191 g Tricalciumphosphat und 5,1 g EDTA als Suspensionsmedium vorgelegt. Dazu werden 50 kg Styrol, die 203,6 g Benzoylperoxid und 127,3 g Tertiärbutylperbenzoat enthalten, gegeben.

Die Mischung wird unter Rühren auf 90 °C aufgeheizt und 3 h bei dieser Temperatur gehalten. Danach werden innerhalb 2 h weitere 10,2 kg Styrol, die 40,8 g Benzoylperoxid und 25,5 g Tertiärbutylperbenzoat enthalten, zudosiert. Nach Beendigung der Dosierung wird mit 25,5 g Polyvinylalkohol nachstabilisiert.

Anschließend werden insgesamt 3,7kg Pentan innerhalb 1 h unter gleichzeitigem Aufheizen auf 110 °C zugegeben. Nach weiteren 5 h Polymerisationszeit wird die Suspension ausgefahren, das Polymerisat abfiltriert, getrocknet und gesiebt.

| | |
|---|---|
| Ausbeute: | 65,0 kg |
| K-Wert: | 56,8 |
| mono-Styrol: | 0,12 Gew.-% |
| Treibmittelgehalt: | 6,68 Gew.-% |
| Wassergehalt : | 0,08 Gew.-% |

### Kornverteilung:

| | | | | | | | | |
|---|---|---|---|---|---|---|---|---|
| >2,5 mm | >2,0 mm | >1,6 mm | >1,25 mm | >1,0 mm | >0,9 mm | >0,8 mm | >0,63 mm | >0,5 mm |
| 3,1 % | 13,0 % | 22,1 % | 36,8 % | 11,0 % | 6,9 % | 2,2 % | 3,6 % | 0,8 % |

- Feingut:: 0,5 %

### Beispiel 2

Reaktionsbedingungen und Reaktionstemperaturen wie Beispiel 1, jedoch 0,1 % Polyvinylalkohol anstelle der Hydroxyethylcellulose und des Tricalciumphosphats.

| | |
|---|---|
| Ausbeute: | 65,0 kg |
| K-Wert: | 56,3 |
| mono-Styrol: | 0,10 Gew.-% |
| Treibmittelgehalt: | 6,42 Gew.-% |
| Wassergehalt : | 0,24 Gew.-% |

### Kornverteilung:

| | | | | | | | | |
|---|---|---|---|---|---|---|---|---|
| >2,5 mm | >2,0 mm | >1,6 mm | >1,25 mm | >1,0 mm | >0,9 mm | >0,8 mm | >0,63 mm | >0,5mm |
| 5,1% | 3.5% | 20,2% | 35,6% | 14,8% | 9,6% | 0,6% | 0,4% | 0,4% |

- Feingut:: 0,2%

### Vergleichsbeispiel 3

Reaktionsbedingungen und Reaktionstemperaturen wie Beispiel 1, jedoch ohne Nachdosierung eines Teils der organischen Phase.

| | |
|---|---|
| Ausbeute: | 55 kg |
| K-Wert: | 54,0 |
| mono-Styrol: | 0,29 Gew.-% |
| Treibmittelgehalt: | 6,16 Gew.-% |
| Wassergehalt: | 0,11 Gew.-% |

### Kornverteilung:

| | | | | | | | | |
|---|---|---|---|---|---|---|---|---|
| >2,5 mm | >2,0 mm | >1,6 mm | >1,25 mm | >1,0 mm | >0,9 mm | >0,8 mm | >0,63 mm | >0,5mm |
| 2,6% | 3,2% | 3,2% | 8,7% | 11,3% | 17,8% | 13, 5% | 28,4% | 8,4% |

- Feingut:: 2,9%

## Patentansprüche

1. Verfahren zur Herstellung expandierbarer Styrolpolymerisate mit grober Endkörnung durch Polymerisation von Styrol und ggf. üblichen Comonomeren in wäßriger Suspension unter Rühren in Gegenwart monomerlöslicher, radikalbildender Initiatoren und Dispergiermittel,
dadurch gekennzeichnet,
daß 70 bis 90 % der Monomeren, bezogen auf das Gesamtmonomer, in wäßriger Suspension in Gegenwart von Dispergiermittel, Initiator und sonstigen Zuschlagstoffen zunächst bis zu einem Umsatz von 70 Gew.-% polymerisiert und dann die restliche Menge Monomer, Initiator und ggf. weitere Zuschlagstoffe innerhalb von einer bis zu drei Stunden nachdosiert werden und anschließend die Treibmittelzugabe erfolgt.

2. Verfahren nach Anspruch 1,
dadurch gekennzeichnet,
daß das vorgelegte Monomer 120 bis 210 Minuten polymerisiert und anschließend das restliche Monomer zudosiert wird.

3. Verfahren nach Anspruch 1,
dadurch gekennzeichnet,
daß die nachdosierte Monomermenge 10 bis 30 Gew.-%, bezogen auf das Gesamtmonomer, beträgt.

4. Verfahren nach Anspruch 1,
dadurch gekennzeichnet,
daß die Dosiergeschwindigkeit derart gewählt wird, daß der Restmonomergehalt immer ≦ 30 Gew.-% beträgt.

## Claims

1. A process for the preparation of expandable styrene polymers having a coarse final particle size by polymerisation of styrene and if desired conventional comonomers in aqueous suspension while stirring in the presence of monomer-soluble free radical initiators and dispersants, characterised in that 70 to 90%, based on the total monomer, of the monomers are polymerised in aqueous suspension in the presence of a dispersant, an initiator and other additives, initially to a conversion of 70% by weight, and the residual amount of monomer, initiator and if desired further additives is then subsequently metered in within one to three hours and the blowing agent is then added.

2. A process according to claim 1, characterised in that the initially introduced monomer is polymerised for 120 to 210 minutes and the residual monomer is then metered in.

3. A process according to claim 1, characterised in that the subsequently metered amount of monomer is 10 to 30% by weight, based on the total monomer.

4. A process according to claim 1, characterised in that the metering rate is chosen so that the residual monomer content is always ≦ 30% by weight.

## Revendications

1. Procédé pour fabriquer des polymères de styrène expansibles à grosse granulométrie finale, par polymérisation de styrène et éventuellement de comonomères usuels en suspension aqueuse, par agitation en présence d'amorceurs radicalaires et de dispersants solubles dans les monomères, caractérisé en ce que l'on polymérise d'abord, jusqu'à un taux de conversion de 70 % en poids, 70 à 90 % des monomères, par rapport à la totalité des monomères, en suspension aqueuse en présence d'un dispersant, d'un amorceur et d'autres adjuvants, puis on ajoute en 1 ou 3 heures le reste des monomères, de l'amorceur et éventuellement d'autres adjuvants, l'agent porogène étant ajouté ensuite.

2. Procédé selon la revendication 1,
caractérisé en ce qu'on polymérise le monomère en place pendant 120 à 210 minutes, et qu'on ajoute ensuite le reste du monomère.

3. Procédé selon la revendication 1,
caractérisé en ce que la quantité de monomères ajoutée ensuite est de 10 à 30 % en poids par rapport au total des monomères.

4. Procédé selon la revendication 1,
caractérisé en ce que la vitesse d'addition est choisie de façon que la teneur en monomères résiduels soit toujours ≦ 30 % en poids.
